# FASCICULE DE BREVET EUROPEEN

(11) **EP 4 544 155 B1**
(45) Date de publication et mention de la délivrance du brevet: **25.03.2026**
(21) Numéro de dépôt: 23744848.5
(22) Date de dépôt: 22.06.2023
(51) Int. Cl.: F01D 5/22, F01D 5/28

(54) **ENSEMBLE AUBAGÉ POUR TURBOMACHINE, TURBINE POUR TURBOMACHINE ET TURBOMACHINE**
BESCHAUFELTE ANORDNUNG FÜR TURBOMASCHINE, TURBINE FÜR TURBOMASCHINE UND TURBOMASCHINE
BLADED ASSEMBLY FOR TURBOMACHINE, TURBINE FOR TURBOMACHINE AND TURBOMACHINE

(30) Priorité: 22.06.2022 FR 2206155
(43) Date de publication de la demande: 30.04.2025
(73) Titulaire: SAFRAN AIRCRAFT ENGINES, 75015 Paris (FR); Safran Ceramics, 33185 Le Haillan (FR)
(72) Inventeur: COUSSEAU, Simon Jean-Marie Bernard, 77550 MOISSY-CRAMAYEL (FR); BARDON, Romain Claude Gabriel, 77550 MOISSY-CRAMAYEL (FR); CHEVILLOT, Fabrice Joël Luc, 77550 MOISSY-CRAMAYEL (FR); GARIN, Fabrice Marcel Noël, 77550 MOISSY-CRAMAYEL (FR); QUENNEHEN, Lucien Henri Jacques, 77550 MOISSY-CRAMAYEL (FR)
(74) Mandataire: Santarelli
(86) Numéro de dépôt international: PCT/FR2023/050940
(87) Numéro de publication internationale: WO 2023/247903

(56) Documents cités:
- JP-A- 2001 200 701
- US-A1- 2014 023 506

## Description

### Domaine technique

La présente invention se rapporte au domaine général des ensembles aubagés au sein des turbomachines, notamment les turbomachines destinées à la propulsion d'aéronefs. Plus précisément, la présente invention concerne un ensemble aubagé pour turbomachine, une turbine pour turbomachine et une turbomachine.

Elle concerne plus particulièrement l'amortissement des vibrations apparaissant en fonctionnement entre les plateformes de deux aubes circonférentiellement adjacentes d'un ensemble aubagé.

### État de la technique antérieure

Un ensemble aubagé de turbomachine, par exemple un ensemble aubagé mobile d'un étage de turbine basse-pression d'un turboréacteur, comprend un disque sur lequel sont montées des aubes.

Au niveau de leur extrémité radiale externe, également dénommée sommet, les aubes présentent chacune un élément transversal, appelé plateforme, qui a notamment pour fonction de délimiter extérieurement la veine d'écoulement du flux gazeux traversant la turbine ou, plus généralement, la partie concernée de la turbomachine.

La plateforme d'une telle aube comporte un bord amont et un bord aval orientés perpendiculairement au sens d'écoulement du flux gazeux. Ces bords sont reliés entre eux par l'intermédiaire de deux bords latéraux formant les extrémités circonférentielles de la plateforme et par lesquels la plateforme de l'aube vient sensiblement en contact avec les plateformes des deux aubes de l'ensemble aubagé qui lui sont directement adjacentes circonférentiellement.

Une solution connue pour limiter les contraintes vibratoires sur de telles aubes consiste à doter chacun de ces bords latéraux avec un profil complexe comprenant des portions non-axiales, c'est-à-dire non parallèles à l'axe de rotation de l'ensemble aubagé, et comprenant par exemple des excroissances et empreintes complémentaires. En effet, afin d'amortir les vibrations auxquelles les aubes sont soumises lors du fonctionnement de la turbine, il est connu de monter les aubes sur le disque avec une contrainte de torsion autour de leur axe principal. Au niveau de la plateforme d'une aube particulière, cette contrainte de torsion se traduit par une mise en contact de portions non-axiales de la plateforme de l'aube avec des portions non-axiales des plateformes des aubes voisines. Les vibrations des aubes en fonctionnement induisent des glissements relatifs au niveau de ces zones de contact, qui, couplées aux pressions de contact, créent de l'amortissement par friction. Ce type de configuration est parfois dénommé « interlock ».

Avec ce type de solution, l'effort de contact inter-plateforme peut évoluer en fonctionnement, notamment du fait d'une rotation naturelle de la pale autour de sa ligne moyenne, et du fait d'un mouvement relatif entre plateformes circonférentiellement adjacentes conduisant ces dernières à se rapprocher ou s'écarter.

Dans le cas particulier où l'effort de contact se réduit en fonctionnement par rapport à la situation à l'arrêt, il est nécessaire d'amplifier cet effort de contact lors du montage des aubes pour obtenir un niveau d'effort souhaité à haut régime, où la nécessité d'amortir les vibrations se fait le plus sentir. Une telle adaptation se traduit par des sur-contraintes statiques appliquées aux aubes.

Cela est particulièrement préjudiciable dans le cas d'aube en matériau composite, notamment CMC (composite à matrice céramique), du fait de niveaux de contraintes admissibles relativement faibles pour ce type de matériau, qui rendent les aubes peu tolérantes à la prétorsion. Ainsi, pour une aube en CMC, une forte prétorsion au montage induit des contraintes statiques élevées au regard du niveau admissible, et parfois même au-delà de ce dernier.

Par ailleurs, ce type de matériau se dilate considérablement moins que les matériaux métalliques dans lesquels ont été conventionnellement fabriquées les aubes. Dans le cas d'aubes ayant des plateformes configurées comme indiqué ci-dessus, cela se traduit par un écartement des plateformes circonférentiellement adjacentes à chaud et donc par une diminution de l'effort de contact en fonctionnement.

Des moyens d'amortir les vibrations d'aubes de turbomachine tout en s'affranchissant des difficultés expliquées ci-dessus relatives à la prétorsion des aubes ont été proposés par la demanderesse. L'idée générale consiste alors à ne pas avoir de contact à froid entre aubes circonférentiellement adjacentes, mais à générer un tel contact à chaud.

Le document FR2956152 décrit un exemple de solution de ce type, dans laquelle le contact entre deux plateformes circonférentiellement adjacentes est opéré par une pièce d'amortissement montée avec un certain jeu radial sous l'une des plateformes et venant en appui sous l'autre plateforme sous l'effet de la force centrifuge en fonctionnement et exercer ainsi des forces de friction.

La solution présentée dans ce document présente toutefois un inconvénient du fait que la pièce d'amortissement s'étend partiellement dans la veine d'écoulement du flux gazeux et constitue ainsi une cause de perturbations de ce flux gazeux.

Le document FR2955142 décrit un autre exemple, dans lequel la pièce d'amortissement présente des extrémités logées au sein de cavités formées au sein des plateformes circonférentiellement adjacentes, également avec un certain jeu radial, de sorte à venir en appui contre la paroi délimitant chacune des cavités sous l'effet de la force centrifuge en fonctionnement.

Du fait que les cavités s'étendent dans la direction circonférentielle et sont à section fermée transversalement à la direction circonférentielle, la solution présentée dans ce document permet d'introduire de la dissipation par frottement du fait des mouvements relatifs des plateformes. Cette solution n'est pas intrusive dans le flux gazeux. En revanche, cette solution conduit à un alourdissement de la plateforme du fait du volume de matière relativement important requis pour former les cavités et la pièce d'amortissement, préjudiciable à la tenue de la pale.

Le document FR2955608 décrit encore un autre exemple, dans lequel la pièce d'amortissement est une feuille présentant des extrémités logées au sein de cavités formées au sein des plateformes circonférentiellement adjacentes, de sorte à venir en appui contre la paroi délimitant chacune des cavités sous l'effet de la force centrifuge en fonctionnement. Cette solution permet donc là aussi de limiter les possibilités d'éloignement mutuel des deux plateformes dans la direction de l'axe de rotation de l'ensemble aubagé.

Le document JP2001200701A décrit l'état de l'art antérieur.

### Exposé de l'invention

L'invention a pour but de fournir une solution d'atténuation des vibrations des ensembles aubagés de turbomachine, notamment ceux dont les aubes sont en matériau composite tel qu'un matériau composite à matrice céramique (CMC), permettant en particulier de limiter au mieux les contraintes mécaniques appliquées aux aubes et d'éviter en tout ou partie les inconvénients mentionnés ci-dessus.

Elle propose à cet effet un ensemble aubagé pour turbomachine, comprenant une pluralité d'aubes réparties autour d'un axe et comprenant chacune une pale, et une plateforme formée à une extrémité libre de l'aube, et dans lequel la plateforme de chaque aube comporte un organe de friction et une ouverture oblongue dans une direction circonférentielle par rapport à l'axe, l'organe de friction étant engagé au travers de l'ouverture formée dans la plateforme d'une aube circonférentiellement adjacente au sein de l'ensemble aubagé avec un jeu permettant au moins un déplacement de l'organe de friction dans la direction circonférentielle au sein de l'ouverture.

Dans des modes de réalisation préférés, un angle entre un plan d'une section fermée oblongue de l'ouverture et une direction radiale par rapport à l'axe, au niveau de ladite ouverture, est compris entre 45 degrés et 90 degrés.

Le plan de ladite section fermée oblongue est préférentiellement orthogonal à la direction radiale.

Dans des modes de réalisation préférés, ledit organe de friction présente une géométrie de révolution autour d'un axe qui s'étend selon ladite direction radiale.

Dans des modes de réalisation préférés, la plateforme de chaque aube présente une surface en saillie de laquelle ledit organe de friction s'étend radialement, et une partie d'engagement qui s'étend circonférentiellement en saillie d'une extrémité circonférentielle de la plateforme, qui est décalée radialement par rapport à la surface, et au travers de laquelle est formée ladite ouverture.

Dans des modes de réalisation préférés, ledit organe de friction est venu de matière avec ladite plateforme.

Dans des modes de réalisation préférés, l'organe de friction présente une surface d'extrémité de niveau avec une surface de la partie d'engagement. Autrement dit, la surface d'extrémité de l'organe de friction affleure ladite surface de la partie d'engagement.

L'invention concerne également une turbine pour turbomachine, comprenant au moins un ensemble aubagé du type décrit ci-dessus.

L'invention concerne également une turbomachine, comprenant au moins une turbine du type décrit ci-dessus.

### Brève description des dessins

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
[Fig. 1] est une vue schématique en coupe axiale d'une turbomachine ;
[Fig. 2] est une vue schématique partielle en perspective d'un ensemble aubagé pour turbomachine selon un mode de réalisation préféré de l'invention, vu radialement depuis l'extérieur, montrant notamment des plateformes respectives d'aubes de l'ensemble aubagé ;
[Fig. 3A] est une vue schématique partielle en perspective d'une aube de l'ensemble aubagé de la figure 2, vue radialement depuis l'intérieur ;
[Fig. 3B] est une vue schématique partielle en perspective de l'aube de la figure 3A, vue radialement depuis l'extérieur;
[Fig. 4] est une vue schématique partielle en perspective et en coupe transversale de l'ensemble aubagé de la figure 2, montrant deux aubes circonférentiellement adjacentes de cet ensemble aubagé ;
[Fig. 5] est une vue schématique partielle en section transversale de l'ensemble aubagé de la figure 2, montrant la région de jonction entre deux aubes et un disque dudit ensemble aubagé.

Dans l'ensemble de ces figures, des références identiques peuvent désigner des éléments identiques ou analogues.

### Exposé détaillé de modes de réalisation préférés

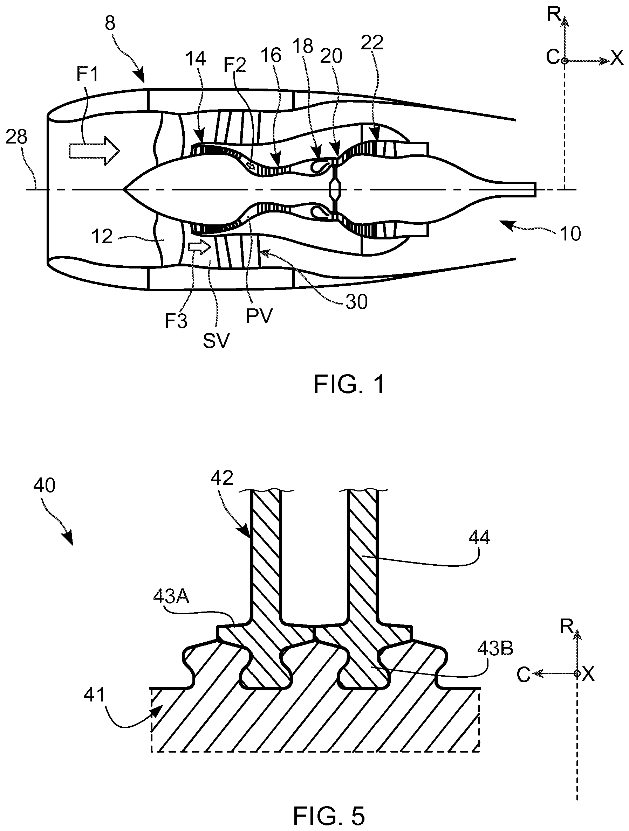

La figure 1 illustre une turbomachine 10, par exemple un turboréacteur à double flux et à double corps pour aéronef, comportant de manière générale une soufflante 12 destinée à l'aspiration d'un flux d'air F1 se divisant en aval de la soufflante en un flux primaire F2 circulant dans un canal d'écoulement de flux primaire, ci-après dénommé veine primaire PV, et un flux secondaire F3 circulant dans un canal d'écoulement de flux secondaire, ci-après dénommé veine secondaire SV, disposé autour de la veine primaire PV.

La turbomachine comporte, de manière générale, un compresseur basse pression 14, un compresseur haute pression 16, une chambre de combustion 18, une turbine haute pression 20 et une turbine basse pression 22 qui définissent conjointement la veine primaire PV.

Les rotors respectifs du compresseur haute pression et de la turbine haute pression sont reliés par un arbre dit « arbre haute pression », tandis que les rotors respectifs du compresseur basse pression et de la turbine basse pression sont reliés par un arbre dit « arbre basse pression », d'une manière bien connue. Ces rotors sont montés rotatifs autour d'un axe 28 de la turbomachine.

Dans l'ensemble de cette description, la direction axiale X est la direction de l'axe 28. La direction radiale R est en tout point une direction orthogonale à l'axe 28 et passant par ce dernier, et la direction orthoradiale ou circonférentielle C est en tout point une direction orthogonale à la direction radiale R et à l'axe 28. Un plan transversal est un plan orthogonal à l'axe 28. Les termes « interne » et « externe » font respectivement référence à une relative proximité, et un relatif éloignement, d'un élément par rapport à l'axe 28. Enfin, les directions « amont » et « aval » sont définies par référence à la direction générale de l'écoulement des gaz dans les veines primaire PV et secondaire SV de la turbomachine, selon la direction axiale X.

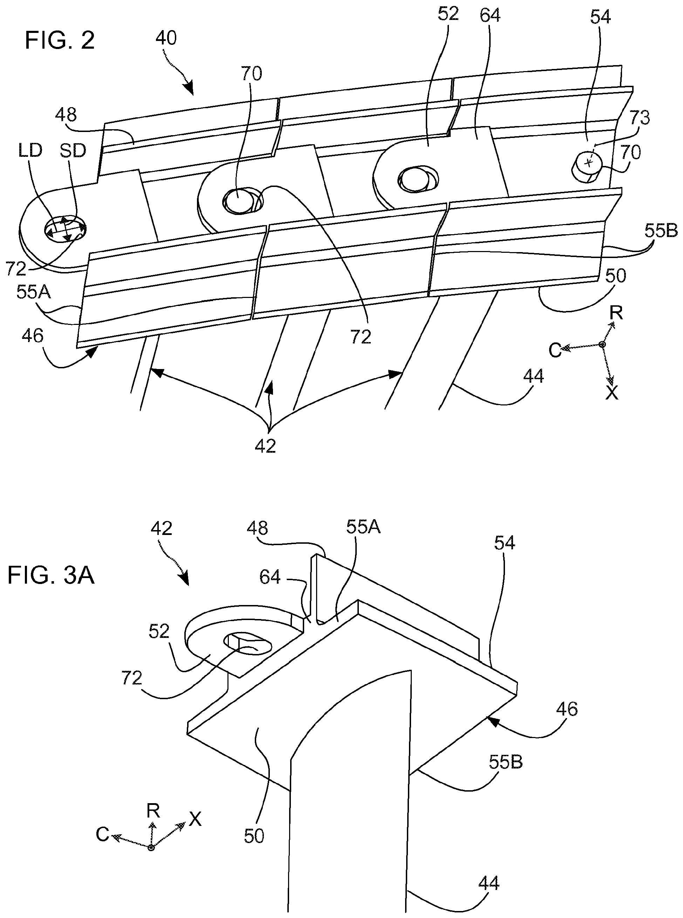

Les figures 2-4 illustrent un ensemble aubagé 40 pour rotor de turbomachine, par exemple destiné à être utilisé au sein de la turbine basse pression 22 de la turbomachine 10 de la figure 1 ou d'un autre composant de turbomachine.

Un tel ensemble aubagé comporte une rangée annulaire d'aubes 42 réparties autour d'un axe de l'ensemble aubagé qui se confond avec l'axe 28 lorsque l'ensemble aubagé est monté au sein d'une turbomachine, et par exemple montées sur un disque de rotor correspondant.

Chaque aube 42 comporte notamment une pale 44 et une plateforme 46 formée à l'extrémité radialement externe de la pale 44. En référence à la figure 5, une telle aube 42 comporte aussi typiquement une plateforme 43A agencée à la base de la pale 44 et un pied 43B agencé sous la plateforme 43A pour permettre le montage de l'aube dans un disque 41 de l'ensemble aubagé 40.

Les pales 44 des aubes présentent un profil aérodynamique qui leur permet d'interagir avec les gaz circulant dans la veine primaire PV.

Les plateformes 46 ont pour principale fonction de délimiter extérieurement la veine primaire PV au moyen de surfaces internes 50 respectives des plateformes, et de limiter au mieux les fuites de gaz autour de l'ensemble aubagé 40 afin de maximiser l'interaction entre le gaz et les pales 44. À cet effet les plateformes 46 comportent typiquement des nervures 48, couramment dénommées léchettes d'étanchéité, formées en saillie radialement vers l'extérieur à partir de surfaces externes 54 respectives des plateformes, et dont les extrémités sont destinées à creuser des sillons correspondants au sein d'un anneau en matériau abradable agencé autour de l'ensemble aubagé 40 au sein d'une turbomachine.

À l'instar des plateformes d'ensembles aubagés connus, chacune des plateformes 46 présente deux extrémités circonférentielles 55A, 55B respectivement en regard d'extrémités circonférentielles correspondantes des deux plateformes qui lui sont circonférentiellement adjacentes.

L'ensemble aubagé 40 présente la particularité d'offrir un nouveau mode de limitation d'amplitude des vibrations des aubes 42, dont la mise en œuvre repose sur le fait que la plateforme 46 de chaque aube 42 comporte un organe de friction 70 engagé au travers d'une ouverture 72 formée dans la plateforme d'une aube circonférentiellement adjacente et présentant une section fermée oblongue dans la direction circonférentielle C de sorte que l'organe de friction 70 puisse se déplacer dans la direction circonférentielle C au sein de l'ouverture 72 au gré de vibrations des plateformes. Il faut donc comprendre que la plateforme 46 de chaque aube comporte à la fois un organe de friction 70, qui est engagé dans l'ouverture 72 d'une aube subséquente, et une ouverture 72, dans laquelle est engagé l'organe de friction 70 d'une aube précédente, les notions d'aube subséquente et d'aube précédente étant considérées par référence à un sens de rotation arbitraire autour de l'axe 28. Par ailleurs, selon la définition générale de l'invention, l'ouverture présente donc une première dimension dans la direction circonférentielle C, ci-après dénommée « grande dimension LD », une seconde dimension, plus petite que la première dimension et ci-après dénommée « petite dimension SD », dans une première direction orthogonale à la direction circonférentielle C, et l'ouverture 72 est ouverte selon une seconde direction orthogonale à la direction circonférentielle C et à la première direction. L'organe de friction 70 peut se déplacer au moins dans la direction circonférentielle C et peut dans l'exemple préférentiel illustré aussi se déplacer dans une certaine mesure dans la première direction. Autrement dit, l'organe de friction 70 est engagé dans l'ouverture 72 avec jeu dans la direction circonférentielle C et dans la première direction.

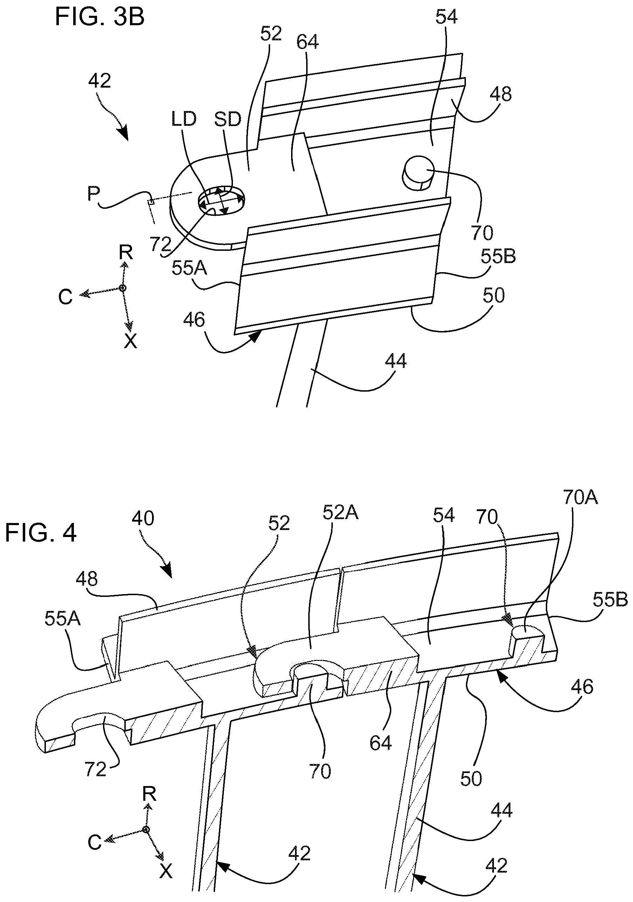

La section fermée oblongue de l'ouverture 72 est définie dans un plan P (figure 3B) faisant avec la direction radiale R un angle compris entre 45 degrés et 90 degrés, et égal à 90 degrés dans l'exemple préférentiel illustré. Ainsi, dans cet exemple, la première direction, c'est-à-dire la direction de la petite dimension SD de l'ouverture, est la direction axiale X, tandis que l'ouverture est ouverte selon la direction radiale R.

De plus, l'organe de friction 70 présente une géométrie de révolution autour d'un axe 73 qui, au moins dans une orientation nominale de l'organe de friction, s'étend selon la direction radiale R.

Dans l'exemple illustré, l'organe de friction 70 est ainsi un pion de forme générale cylindrique ayant pour axe l'axe 73 précité.

De plus, l'organe de friction 70 s'étend radialement vers l'extérieur à partir de la surface externe 54 de la plateforme 46 (figure 3B), et la plateforme 46 de chaque aube 42 comprend une partie d'engagement 52 s'étendant circonférentiellement en saillie à partir de l'une des extrémités circonférentielles 55A de la plateforme, et au travers de laquelle est formée l'ouverture 72 (figure 3A). La partie d'engagement 52 est donc décalée circonférentiellement par rapport à la surface externe 54.

La partie d'engagement 52 est en outre décalée radialement vers l'extérieur par rapport à la surface externe 54.

À cet effet, la plateforme 46 de chaque aube comprend par exemple, à l'extrémité circonférentielle 55A, un rebord 64 s'étendant en saillie radialement vers l'extérieur par rapport à la surface externe 54 et à partir duquel la partie d'engagement 52, en forme de patte ou de lame, se projette circonférentiellement au-delà de l'extrémité circonférentielle 55A. Il doit donc être compris que la partie d'engagement 52 d'une aube est disposée radialement en regard de la surface externe 54 de la plateforme 46 d'une aube circonférentiellement adjacente. La partie d'engagement 52 est ainsi située à l'extérieur de la veine primaire PV, ce qui est préférable pour ne pas perturber l'écoulement gazeux au sein de la veine.

Dans l'exemple illustré, l'organe de friction 70 est venu de matière avec la plateforme 46. De plus, l'organe de friction 70 présente une surface d'extrémité radialement externe 70A qui est de niveau avec une surface radialement externe 52A de la partie d'engagement 52 (figure 4).

D'une manière générale, un écartement mutuel des plateformes 46 dans la direction circonférentielle en fonctionnement du fait de vibrations des aubes conduit l'organe de friction 70 à se déplacer le long d'un bord de l'ouverture 72. Cela génère des frottements de nature à dissiper de l'énergie et donc limiter l'amplitude des vibrations, ce qui permet de limiter les contraintes dans les aubes.

Par ailleurs, la coopération entre l'organe de friction 70 et l'ouverture 72 permet de limiter l'amplitude de débattement des plateformes 46 les unes par rapport aux autres à la fois dans la direction circonférentielle et dans la première direction précitée. En effet, du fait du jeu prévu entre le bord de l'ouverture 72 et l'organe de friction 70 dans la première direction précitée, c'est-à-dire la direction de la petite dimension SD de l'ouverture 72, lorsque l'organe de friction 70 se trouve à une extrémité circonférentielle de l'ouverture 72, un frottement entre ce dernier et le bord de l'ouverture 72 se produit au niveau de ladite extrémité au gré de vibrations des plateformes 46 dans la première direction.

Il est à noter cependant que l'ouverture 72 présente de préférence une étendue circonférentielle suffisante pour qu'en fonctionnement normal, l'organe de friction 70, bien que susceptible de se rapprocher des extrémités circonférentielles de l'ouverture 72, voire d'entrer en contact avec le bord de l'ouverture au niveau de ces extrémités, ne transmette pas d'effort significatif dans la direction circonférentielle à la plateforme circonférentiellement adjacente dans laquelle est formée l'ouverture 72 considérée.

Il est à noter que l'invention est bien entendu également applicable aux ensembles aubagés dans lesquels les extrémités libres des aubes sont les extrémités radialement internes de ces dernières, par exemple pour des turbines contra-rotatives. Dans ce cas, la configuration des plateformes est préférentiellement inversée vis-à-vis de la direction radiale. Ainsi, l'organe de friction s'étend dans ce cas préférentiellement en saillie radialement vers l'intérieur à partir d'une surface interne de chaque plateforme, et la partie d'engagement de chaque plateforme est préférentiellement décalée radialement vers l'intérieur par rapport à ladite surface interne de la plateforme.

L'invention peut en outre être appliquée aux ensembles aubagés statiques.

## Revendications

1. Ensemble aubagé (40) pour turbomachine, comprenant une pluralité d'aubes (42) réparties autour d'un axe (28) et comprenant chacune une pale (44), et une plateforme (46) formée à une extrémité libre de l'aube (42),
**caractérisé en ce que** la plateforme (46) de chaque aube (42) comporte un organe de friction (70) et une ouverture (72) oblongue dans une direction circonférentielle (C) par rapport à l'axe (28), l'organe de friction (70) étant engagé au travers de l'ouverture (72) formée dans la plateforme (46) d'une aube (42) circonférentiellement adjacente au sein de l'ensemble aubagé (40) avec un jeu permettant au moins un déplacement de l'organe de friction (70) dans la direction circonférentielle (C) au sein de l'ouverture (72).

2. Ensemble aubagé selon la revendication 1, dans lequel un angle entre un plan (P) d'une section fermée oblongue de l'ouverture (72) et une direction radiale (R) par rapport à l'axe (28), au niveau de ladite ouverture (72), est compris entre 45 degrés et 90 degrés.

3. Ensemble aubagé selon la revendication 2, dans lequel le plan (P) de ladite section fermée oblongue est orthogonal à la direction radiale (R).

4. Ensemble aubagé selon la revendication 2 ou 3, dans lequel ledit organe de friction (70) présente une géométrie de révolution autour d'un axe (73) qui s'étend selon ladite direction radiale (R).

5. Ensemble aubagé selon l'une quelconque des revendications 2 à 4, dans lequel la plateforme (46) de chaque aube (42) présente une surface (54) en saillie de laquelle ledit organe de friction (70) s'étend radialement, et une partie d'engagement (52) qui s'étend circonférentiellement en saillie d'une extrémité circonférentielle (55A) de la plateforme, qui est décalée radialement par rapport à la surface (54), et au travers de laquelle est formée ladite ouverture (72).

6. Ensemble aubagé selon la revendication 5, dans lequel ledit organe de friction (70) est venu de matière avec ladite plateforme (46).

7. Ensemble aubagé selon la revendication 5 ou 6, dans lequel l'organe de friction (70) présente une surface d'extrémité (70A) de niveau avec une surface (52A) de la partie d'engagement (52).

8. Turbine (22) pour turbomachine, comprenant au moins un ensemble aubagé (40) selon l'une quelconque des revendications 1 à 7.

9. Turbomachine (10), comprenant au moins une turbine (22) selon la revendication 8.

## Patentansprüche

1. Leitschaufelbaugruppe (40) für Turbomaschinen, umfassend eine Vielzahl von Leitschaufeln (42), die um eine Achse (28) verteilt sind und jeweils ein Blatt (44) und eine Plattform (46) umfassen, die an einem freien Ende der Leitschaufel (42) ausgebildet ist,
**dadurch gekennzeichnet, dass** die Plattform (46) jeder Leitschaufel (42) ein Reibelement (70) und eine längliche Öffnung (72) in einer Umfangsrichtung (C) in Bezug auf die Achse (28) aufweist, wobei das Reibelement (70) durch die Öffnung (72) in Eingriff steht, die in der Plattform (46) einer in Umfangsrichtung benachbarten Leitschaufel (42) innerhalb der Leitschaufelbaugruppe (40) ausgebildet ist, wobei ein Spiel mindestens eine Bewegung des Reibelements (70) in Umfangsrichtung (C) innerhalb der Öffnung (72) ermöglicht.

2. Leitschaufelbaugruppe nach Anspruch 1, wobei ein Winkel zwischen einer Ebene (P) eines länglichen geschlossenen Abschnitts der Öffnung (72) und einer radialen Richtung (R) in Bezug auf die Achse (28), auf Höhe der Öffnung (72), zwischen 45 Grad und 90 Grad liegt.

3. Leitschaufelbaugruppe nach Anspruch 2, wobei die Ebene (P) des länglichen geschlossenen Abschnitts orthogonal zu der radialen Richtung (R) ist.

4. Leitschaufelbaugruppe nach Anspruch 2 oder 3, wobei das Reibelement (70) eine Umdrehungsgeometrie um eine Achse (73) besitzt, die sich nach der radialen Richtung (R) erstreckt.

5. Leitschaufelbaugruppe nach einem der Ansprüche 2 bis 4, wobei die Plattform (46) jeder Leitschaufel (42) eine vorstehende Oberfläche (54) besitzt, von der sich das Reibelement (70) radial erstreckt, und einen Eingriffsteil (52), der sich umlaufend vor einem Umfangsende (55A) der Plattform erstreckt, der radial gegenüber der Oberfläche (54) versetzt ist, und durch den die Öffnung (72) gebildet ist.

6. Leitschaufelbaugruppe nach Anspruch 5, wobei das Reibelement (70) aus dem gleichen Material wie die Plattform (46) besteht.

7. Leitschaufelbaugruppe nach Anspruch 5 oder 6, wobei das Reibelement (70) eine mit einer Oberfläche (52A) des Eingriffsteils (52) bündige Endfläche (70A) besitzt.

8. Turbine (22) für eine Turbomaschine, umfassend mindestens eine Leitschaufelbaugruppe (40) nach einem der Ansprüche 1 bis 7.

9. Turbomaschine (10), umfassend mindestens eine Turbine (18) nach Anspruch 8.

## Claims

1. Bladed assembly (40) for a turbomachine, comprising a plurality of blades (42) distributed about an axis (28) and each comprising an airfoil (44), and a platform (46) formed at a free end of the blade (42), **characterized in that** the platform (46) of each blade (42) includes a friction member (70) and an opening (72) that is oblong in a circumferential direction (C) with respect to the axis (28), the friction member (70) being engaged through the opening (72) formed in the platform (46) of a circumferentially adjacent blade (42) within the bladed assembly (40) with a clearance allowing the friction member (70) to move at least in the circumferential direction (C) within the opening (72).

2. Bladed assembly according to claim 1, wherein an angle between a plane (P) of an oblong closed section of the opening (72) and a radial direction (R) with respect to the axis (28), at said opening (72), is between 45 degrees and 90 degrees.

3. Bladed assembly according to claim 2, wherein the plane (P) of said oblong closed section is orthogonal to the radial direction (R).

4. Bladed assembly according to claim 2 or 3, wherein said friction member (70) has a geometry of revolution about an axis (73) that extends in said radial direction (R).

5. Bladed assembly according to any one of claims 2 to 4, wherein the platform (46) of each blade (42) has a surface (54) from which said friction member (70) protrudes radially, and an engagement part (52) that extends circumferentially protruding from a circumferential end (55A) of the platform, which is radially offset with respect to the surface (54), and through which said opening (72) is formed.

6. Bladed assembly according to claim 5, wherein said friction member (70) is integrally formed with said platform (46).

7. Bladed assembly according to claim 5 or 6, wherein the friction member (70) has an end surface (70A) level with a surface (52A) of the engagement part (52).

8. Turbine (22) for a turbomachine, comprising at least one bladed assembly (40) according to any one of claims 1 to 7.

9. Turbomachine (10), comprising at least one turbine (22) according to claim 8.
